# EUROPEAN PATENT APPLICATION

(11) **EP 3 868 716 A1**
(43) Date of publication of application: **25.08.2021**
(21) Application number: 21158045.1
(22) Date of filing: 19.02.2021
(51) Int. Cl.: C01G 53/00, H01M 4/505

(54) **PROCESS**

(30) Priority: 21.02.2020 GB 202002417
(71) Applicant: Johnson Matthey Public Limited Company, London EC4A 4AB (GB)
(72) Inventor: CAIRNS, Daniel, Billingham, Cleveland TS23 1LB (GB); CONNAGHAN, Paul, Billingham, Cleveland TS23 1LB (GB); DIAMOND, Andrew, Billingham, Cleveland TS23 1LB (GB); HILL, Jessica, Billingham, Cleveland TS23 1LB (GB); JOHNSON, Stuart, Billingham, Cleveland TS23 1LB (GB)
(74) Representative: Gleave, Robert James

(57) **Abstract**

A process for producing a surface-modified particulate lithium nickel metal oxide material is provided. The process comprises the addition of a controlled quantity of a coating liquid comprising a cobalt-containing compound to nickel metal precursor particles using an incipient wetness process followed by a calcination step.

## Description

### Field of the Invention

The present invention relates to improved processes for making lithium nickel metal oxide materials which have utility as cathode materials in secondary lithium-ion batteries.

### Background of the Invention

Lithium nickel metal oxide materials having a layered structure find utility as cathode materials in secondary lithium-ion batteries. High nickel content in such materials can lead to a high discharge capacity but can also lead to a reduced capacity retention due to poor electrochemical stability after repeated charge-discharge cycles.

It has been found that increasing or enriching the amount of certain metal elements, such as cobalt, at the particle surface or, in the case of secondary particles, at the grain boundary between adjacent primary particles, can be an effective way to improve capacity retention.

Typically, lithium nickel metal oxide materials are produced by mixing a nickel metal precursor with a source of lithium, and then calcining the mixture to form the desired layered crystalline structure. Grain boundary enrichment is then achieved by immersion of secondary particles of the lithium nickel metal oxide material in a solution of one of more metal-containing compounds and then removal of the solvent through evaporation, followed by a second calcination step.

For example, WO2013025328 describes a particle including a plurality of crystallites including a lithium nickel metal oxide composition having a layered α-NaFeO₂-type structure, and a grain boundary between adjacent crystallites, wherein a concentration of cobalt in the grain boundaries is greater than in the crystallites. Example 2 of WO2013025328 has the composition Li_{1.01}Mg_{0.024}Ni_{0.88}Co_{0.12}O_{2.03} and has cobalt-enriched grain boundaries. In order to form this material, a mixture of a nickel cobalt hydroxide precursor, lithium hydroxide, magnesium hydroxide and lithium nitrate is calcined to form a lithium nickel metal oxide base material (Example 1). In order to achieve enrichment of the grain boundaries, particles of the lithium nickel metal oxide base material are then added to an aqueous solution of lithium nitrate and cobalt nitrate and the resulting slurry subsequently spray dried before a second heat treatment step (Example 2).

The use of surface modification and / or grain boundary enrichment has the drawback that additional process steps are required, leading to higher energy consumption, increased levels of process waste, and higher manufacturing costs. This can impact on the commercial viability of such materials and have environmental impacts.

There remains a need for improved processes for the manufacture of lithium nickel metal oxide materials. In particular, there remains a need for improvements in processes which lead to surface modification and / or grain boundary enrichment.

### Summary of the Invention

The present inventors have surprisingly found that immersion of lithium nickel metal oxide particles in a solution of a cobalt-containing compound is not required to achieve cobalt grain boundary enrichment, and that the addition of a controlled volume of a coating liquid to secondary particles of lithium nickel metal precursor materials can be used to modify the composition at the grain boundaries of the formed lithium nickel metal oxide materials after a single calcination step.

It has further been found that the capacity retention of materials produced by immersion-evaporation methods may be at least matched by materials produced by the herein described process, with the advantage that spray-drying and multiple calcinations are not required during the manufacturing process, significantly reducing energy consumption.

Accordingly, in a first aspect of the invention there is provided a process for producing a surface-modified particulate lithium nickel metal oxide material having a composition according to Formula 1:

LiₐNiₓCo_{y}A_{z}O_{2+b} Formula 1

in which:
A is one or more of Al, V, Ti, B, Zr, Cu, Sn, Cr, Fe, Ga, Si, Zn, Mg, Sr, Mn, Ca, S, Ce, La, Mo, Nb, P, Sb, W
0.8 ≤ a ≤ 1.2
0.5 ≤ x < 1
0 < y ≤ 0.5
0 ≤ z ≤ 0.2
-0.2 ≤ b ≤ 0.2
x + y + z = 1
the process comprising the steps of:
(i) providing nickel metal precursor particles in the form of secondary particles comprising a plurality of primary particles;
(ii) providing a coating liquid comprising a cobalt-containing compound;
(iii) adding the coating liquid to the nickel metal precursor particles using an incipient wetness process to form an impregnated powder;
(iv) calcining the impregnated powder to form the surface-modified particulate lithium nickel metal oxide material;
the process additionally comprising the addition of at least one lithium-containing compound to the nickel metal precursor particles and / or mixing the impregnated powder with a lithium-containing compound prior to calcination step (iv).

In a second aspect of the invention there is provided a surface-modified particulate lithium nickel metal oxide obtained or obtainable by a process described herein.

### Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

The present invention provides a process for the production of surface-modified particulate lithium nickel metal oxide materials having a composition according to Formula I as defined above.

In Formula I, 0.8 ≤ a ≤ 1.2. It may be preferred that a is greater than or equal to 0.9, or 0.95. It may be preferred that a is less than or equal to 1.1, or less than or equal to 1.05. It may be preferred that 0.90 ≤ a ≤ 1.10, for example 0.95 ≤ a ≤ 1.05, or that a = 0 or about 0.

In Formula I, 0.5 ≤ x < 1. It may be preferred that 0.6 ≤ x < 1, for example 0.7 ≤ x < 1, 0.75 ≤ x < 1, 0.8 ≤ x < 1, 0.85 ≤ x < 1 or 0.9 ≤ x < 1. It may be preferred that x is less than or equal to 0.99, 0.98, 0.97, 0.96 or 0.95. It may be preferred that 0.75 ≤ x < 1, for example 0.75 ≤ x ≤ 0.99, 0.75 ≤ x ≤ 0.98, 0.75 ≤ x ≤ 0.97, 0.75 ≤ x ≤ 0.96 or 0.75 ≤ x ≤ 0.95. It may be further preferred that 0.8 ≤ x < 1, for example 0.8 ≤ x ≤ 0.99, 0.8 ≤ x ≤ 0.98, 0.8 ≤ x ≤ 0.97, 0.8 ≤ x ≤ 0.96 or 0.8 ≤ x ≤ 0.95. It may also be preferred that 0.85 ≤ x < 1, for example 0.85 ≤ x ≤ 0.99, 0.85 ≤ x ≤ 0.98, 0.85 ≤ x ≤ 0.97, 0.85 ≤ x ≤ 0.96 or 0.85 ≤ x ≤ 0.95.

In Formula 1, 0 < y ≤ 0.5. It may be preferred that y is greater than or equal to 0.01, 0.02 or 0.03. It may be preferred that y is less than or equal to 0.4, 0.3, 0.25, 0.2, 0.15, 0.1 or 0.05. It may also be preferred that 0.01 ≤ y ≤ 0.5, 0.02 ≤ y ≤ 0.5, 0.03 ≤ y ≤ 0.5, 0.01 ≤ y ≤ 0.4, 0.01 ≤ y ≤ 0.3, 0.01 ≤ y ≤ 0.25, 0.01 ≤ y ≤ 0.20, 0.01 ≤ y ≤ 0.1 or 0.03 ≤ y ≤ 0.1.

A is one or more of Al, V, Ti, B, Zr, Cu, Sn, Cr, Fe, Ga, Si, Zn, Mg, Sr, Mn, Ca, S, Ce, La, Mo, Nb, P, Sb, W. Preferably, A is one or more of Al, V, Ti, B, Zr, Cu, Sn, Cr, Fe, Ga, Si, Zn, Mg, Sr, Mn and Ca. It may be further preferred that A is one or more of Al, V, Ti, B, Zr, Cu, Sn, Cr, Fe, Ga, Si, Zn, Mg, Sr, and Ca. It may be further preferred that A is at least Mg and / or Al, or A is Al and / or Mg, i.e. that A is Mg and / or Al, optionally in combination with one or more of Al, V, Ti, B, Zr, Cu, Sn, Cr, Fe, Ga, Si, Zn, Mg, Sr, Mn, Ca, S, Ce, La, Mo, Nb, P, Sb, W, or preferably that A is Mg and / or Al, optionally in combination with one or more of Al, V, Ti, B, Zr, Cu, Sn, Cr, Fe, Ga, Si, Zn, Mg, Sr, Mn and Ca. Where A comprises more than one element, z is the sum of the amount of each of the elements making up A.

In Formula I, 0 ≤ z ≤ 0.2. It may be preferred that 0 ≤ z ≤ 0.15, 0 ≤ z ≤ 0.10, 0 ≤ z ≤ 0.05, 0 ≤ z ≤ 0.04, 0 ≤ z ≤ 0.03, 0 ≤ z ≤ 0.02, or that z is 0 or about 0.

In Formula I, -0.2 ≤ b ≤ 0.2. It may be preferred that b is greater than or equal to -0.1. It may also be preferred that b is less than or equal to 0.1. It may be further preferred that - 0.1 ≤ b ≤ 0.1, or that b is 0 or about 0.

It may be preferred that 0.8 ≤ a ≤ 1.2, 0.75 ≤ x < 1,0 < y ≤ 0.25, 0 ≤ z ≤ 0.2, -0.2 ≤ b ≤ 0.2 and x + y + z = 1. It may also be preferred that 0.8 ≤ a ≤ 1.2, 0.75 ≤ x < 1, 0 < y ≤ 0.25, 0 ≤ z ≤ 0.2, -0.2 ≤ b ≤ 0.2, x + y + z = 1, and A = Mg alone or in combination with one or more of Al, V, Ti, B, Zr, Cu, Sn, Cr, Fe, Ga, Si, Zn, Sr, Mn, Ca, S, Ce, La, Mo, Nb, P, Sb, W, or one or more of Al, V, Ti, B, Zr, Cu, Sn, Cr, Fe, Ga, Si, Zn, Sr, and Ca. It may also be preferred that 0.8 ≤ a ≤ 1.2, 0.75 ≤ x < 1, 0 < y ≤ 0.25, 0 ≤ z ≤ 0.2, -0.2 ≤ b ≤ 0.2, x + y + z = 1, and A = Al alone or in combination with one or more of V, Ti, B, Zr, Cu, Sn, Cr, Fe, Ga, Si, Zn, Mg, Sr, Mn, Ca, S, Ce, La, Mo, Nb, P, Sb, W, or one or more of Mg, V, Ti, B, Zr, Cu, Sn, Cr, Fe, Ga, Si, Zn, Sr, and Ca. It may be further preferred that 0.8 ≤ a ≤ 1.2, 0.75 ≤ x < 1, 0 < y ≤ 0.25, 0 ≤ z ≤ 0.2, -0.2 ≤ b ≤ 0.2, x + y + z = 1, and A = Al and Mg alone or in combination with one or more of V, Ti, B, Zr, Cu, Sn, Cr, Fe, Ga, Si, Zn, Sr, Mn, Ca, S, Ce, La, Mo, Nb, P, Sb, W, or one or more of V, Ti, B, Zr, Cu, Sn, Cr, Fe, Ga, Si, Zn, Sr, and Ca. It may also be preferred that 0.8 ≤ a ≤ 1.2, 0.75 ≤ x < 1, 0 < y ≤ 0.25, 0 ≤ z ≤ 0.1, -0.2 ≤ b ≤ 0.2, x + y + z = 1 and A is one or more of Al, V, Ti, B, Zr, Cu, Sn, Cr, Fe, Ga, Si, Zn, Mg, Sr, Mn, Ca, S, Ce, La, Mo, Nb, P, Sb, W, or A is one or more of Al, V, Ti, B, Zr, Cu, Sn, Cr, Fe, Ga, Si, Zn, Mg, Sr, Mn and Ca, or A is one or more of Al, V, Ti, B, Zr, Cu, Sn, Cr, Fe, Ga, Si, Zn, Mg, Sr, and Ca. It be further preferred that 0.8 ≤ a ≤ 1.2, 0.75 ≤ x < 1, 0 < y ≤ 0.25, 0 ≤ z ≤ 0.05, -0.2 ≤ b ≤ 0.2, x + y + z = 1 and A is one or more of A is one or more of Al, V, Ti, B, Zr, Cu, Sn, Cr, Fe, Ga, Si, Zn, Mg, Sr, Mn, Ca, S, Ce, La, Mo, Nb, P, Sb, W, or A is one or more Al, V, Ti, B, Zr, Cu, Sn, Cr, Fe, Ga, Si, Zn, Mg, Sr, Mn and Ca, or A is one or more of Al, V, Ti, B, Zr, Cu, Sn, Cr, Fe, Ga, Si, Zn, Mg, Sr, and Ca .

Typically, the surface-modified particulate lithium nickel metal oxide material is a crystalline (or substantially crystalline material). It may have the α-NaFeO₂-type structure.

The surface-modified lithium nickel metal oxide particles are in the form of secondary particles which comprise a plurality of primary particles (made up from one or more crystallites). The primary particles may also be known as crystal grains. The primary particles are separated by grain boundaries.

Typically, the concentration of cobalt at the grain boundaries of the surface-modified particulate lithium nickel metal oxide material is greater than the concentration of cobalt at the grain boundaries of the nickel metal precursor particles.

The particulate lithium nickel metal oxide material of Formula I is surface-modified. Herein, the term "surface-modified" refers to a particulate material in which the particles comprise a layer of material at or near to the surface of the particles which contains a greater concentration of at least one element than the remaining material of the particle, i.e. the core of the particle. Typically, the surface modification results from contacting the particles with one or more further metal-containing compounds, and then heating the material. For clarity, the discussions of the composition according to Formula I herein when in the context of surface-modified particles relate to the overall particle, i.e. the particle including the modified surface layer.

Typically, the particulate surface-modified lithium nickel metal oxide material of Formula I comprises enriched grain boundaries, i.e. the concentration of one or more metals at the grain boundaries is greater than the concentration of the one or more metals in the primary particles.

It may be preferred that the concentration of cobalt at the grain boundaries between the primary particles of the surface-modified particulate lithium nickel metal oxide materials is greater than the concentration of cobalt in the primary particles. Alternatively, or in addition, it may be further preferred that the concentration of aluminium at the grain boundaries between the primary particles is greater than the concentration of aluminium in the primary particles.

The concentration of cobalt in the primary particles may be at least 0.5 atom %, e.g. at least 1 atom %, at least 2 atom % or at least 2.5 atom % with respect to the total content of Ni, Co and A in the primary particle. The concentration of cobalt in the primary particle may be 35 atom % or less, e.g. 30 atom % or less, 20 atom % or less, atom % or less, 15 atom % or less, 10 atom % or less, 8 atom % or less or 5 atom % or less with respect to the total content of Ni, Co and A in the primary particles.

The concentration of cobalt at the grain boundaries may be at least 1 atom %, at least 2 atom %, at least 2.5 atom % or at least 3 atom % with respect to the total content of Ni, Co, and A at the grain boundaries. The concentration of cobalt at the grain boundaries may be 40 atom % or less, e.g. 35 atom % or less, 30 atom % or less, 20 atom % or less, atom % or less, 15 atom % or less, 10 atom % or less, or 8 atom % or less with respect to the total content of Ni, Co and A in the primary particles.

The difference between the concentration of cobalt in the primary particles and at the grain boundaries may at least 1 atom %, e.g. at least 3 atom % or at least 5 atom % (calculated by subtracting the concentration of cobalt in the primary particles in atom % from the concentration of cobalt at the grain boundaries in atom %).

The concentration of a metal, such as cobalt or aluminium, at the grain boundaries and in the primary particles may be determined by energy dispersive X-ray spectroscopy (EDX) analysis of the centre of a grain boundary and the centre of an adjacent primary particle for a thinly sliced (e.g. 100-150 nm thick) section of a particle by a sectioning technique such as focused ion beam milling.

Typically, the particles of surface-modified lithium nickel metal oxide have a cobalt-rich coating on their surface. The concentration of cobalt in the secondary particles may decrease in a direction from the surface of the secondary particles to the centre of the secondary particles. The difference between the concentration of cobalt at the surface of the secondary particles and in the centre of the secondary particles may be at least 1 atom %, e.g. at least 3 atom % or at least 5 atom % (calculated by subtracting the concentration of cobalt at the surface of the particles in atom % from the concentration of cobalt at the centre of the particles in atom %). The concentration of cobalt may be determined as defined above for the grain boundaries and primary particles.

The secondary particles of surface-modified lithium nickel metal oxide typically have a D50 particle size of at least 1µm, e.g. at least 2µm, at least 4µm or at least 5µm. The particles of surface-modified lithium nickel metal oxide typically have a D50 particle size of 30µm or less, e.g. 25µm or less or 12µm or less. It may be preferred that the particles of surface-modified lithium nickel metal oxide have a D50 of 1µm to 30µm, such as between 2µm and 25µm, or 5µm and 20µm. The term D50 as used herein refers to the median particle diameter of a volume-weighted distribution. The D50 may be determined by using a laser diffraction method (e.g. by suspending the particles in water and analysing using a Malvern Mastersizer 2000).

The process as described herein comprises the addition of a coating liquid to nickel metal precursor particles. The nickel metal precursor is a compound which comprises nickel and one or more additional metals and may be converted to lithium nickel metal oxide with a layered structure upon heat treatment. The nickel metal precursor may be a precipitated nickel metal compound, for example it may be a co-precipitated mixed nickel metal compound.

The nickel metal precursor may be a nickel metal hydroxide, a nickel metal oxyhydroxide or a mixture thereof.

It may be preferred that the nickel metal precursor comprises a compound according to Formula 2:

[Niₓ₂Co_{y2}A_{z2}][Oₚ(OH)_{q}]_{α}, Formula 2

wherein:
A is one or more of Al, V, Ti, B, Zr, Cu, Sn, Cr, Fe, Ga, Si, Zn, Mg, Sr, Mn, Ca, S, Ce, La, Mo, Nb, P, Sb, W, preferably one or more of Al, V, Ti, B, Zr, Cu, Sn, Cr, Fe, Ga, Si, Zn, Mn, Mg, Sr, and Ca;
0.5 ≤ x2 < 1
0 ≤ y2 ≤ 0.5
0 ≤ z2 ≤ 0.2
wherein p is in the range 0 ≤ p < 1; q is in the range 0 < q ≤ 2; x2 + y2 + z2 = 1; and α is selected such that the overall charge balance is 0.

Preferably, p is 0, and q is 2. In other words, preferably the nickel metal precursor is a pure metal hydroxide having the general formula [Niₓ₂Co_{y2}A_{z2}][(OH)₂]_{α}.

As discussed above, α is selected such that the overall charge balance is 0. α may therefore satisfy 0.5 ≤ α ≤ 1.5. For example, α may be 1. Where A includes one or more metals not having a +2 valence state, or not present in a +2 valence state, α may be other than 1.

It will be understood by the skilled person that the values x2, y2, and z2, and the element(s) A, are selected so as to achieve the desired composition in Formula 1 after the process as described herein.

It may be preferred that 0.7 ≤ x2 < 1, 0 < y2 ≤ 0.3, 0 ≤ z2 ≤ 0.2, or that 0.75 ≤ x2 < 1, 0 < y2 ≤ 0.25, 0 ≤ z2 ≤ 0.2. It may also be preferred that 0.75 ≤ x2 < 1, 0 < y2 ≤ 0.25, 0 ≤ z2 ≤ 0.2 and A = Mg alone or in combination with one or more of Al, V, Ti, B, Zr, Cu, Sn, Cr, Fe, Ga, Si, Zn, Sr, Mn, and Ca. It may also be preferred that 0.75 ≤ x1 < 1, 0 < y1 ≤ 0.25, 0 ≤ z1 ≤ 0.2, A = Al alone or in combination with one or more of Mg, V, Ti, B, Zr, Cu, Sn, Cr, Fe, Ga, Si, Zn, Sr, Mn, and Ca.

For example, the nickel metal precursor may be a compound of formula Ni_{0.90}Co_{0.05}Mg_{0.05}(OH)₂, Ni_{0.90}Co_{0.06}Mg_{0.04}(OH)₂, Ni_{0.90}Co_{0.07}Mg_{0.03}(OH)₂, Ni_{0.91}Co_{0.08}Mg_{0.01}(OH)₂, Ni_{0.88}Co_{0.08}Mg_{0.04}(OH)₂, Ni_{0.90}Co_{0.08}Mg_{0.02}(OH)₂, or Ni_{0.93}Co_{0.06}Mg_{0.01}(OH)₂.

The nickel metal precursor particles are provided in the form of secondary particles comprising a plurality of primary particles.

The nickel metal precursor materials are produced by methods well known to the person skilled in the art. Typically, these methods involve the co-precipitation of a mixed metal hydroxide from a solution of metal salts, such as metal sulfates, for example in the presence of ammonia and a base, such as NaOH. In some cases, suitable nickel metal, such as mixed metal hydroxides, may be obtainable from commercial suppliers known to the skilled person.

The coating liquid comprises a cobalt containing-compound and optionally at least one additional metal-containing compound. It will be understood by the skilled person that the additional metal-containing compound (s) comprise one or more elements which are desired to be present in the surface layer of the surface-modified particulate lithium nickel metal oxide material. The metal-containing compounds (including the cobalt-containing compound) are typically metal salts, such as nitrates, sulfates, citrates or acetates. It may be preferred that the metal-containing compounds (including the cobalt-containing compound) are inorganic metal salts. Nitrates may be particularly preferred. Typically, the coating liquid is an aqueous solution.

The cobalt-containing compound is typically a cobalt salt, such as an inorganic cobalt salt, for example cobalt nitrate or cobalt sulfate. Cobalt nitrate may be particularly preferred.

Preferably, the coating liquid comprises an aluminium-containing compound. The aluminium-containing compound is typically an aluminium salt, such as an inorganic aluminium salt, for example aluminium nitrate. This may lead to an increase in the concentration of aluminium at the grain boundaries and/or at or near to the surface of the surface-modified lithium nickel metal oxide particles which may provide improvements in electrochemical performance.

It may be preferred that the cobalt-containing compound and / or the one or more metal-containing compound(s) are provided as hydrates of metal salts, for example a hydrate of a metal nitrate, such as a hydrate of cobalt nitrate and / or aluminium nitrate, optionally in combination with lithium nitrate, or a hydrate of lithium nitrate

It may be particularly preferred that the cobalt salt hydrate and / or the one or more metal salt hydrates are heated to form the coating liquid. Advantageously, such materials dehydrate upon heating leading to a phase change and formation of a liquid suitable for coating with a high metal concentration. Furthermore, metal salt hydrates are typically more economical than de-hydrated equivalents. Optionally, and if required, further water may be added to achieve the required volume of coating liquid.

It may also be preferred that the coating liquid is formed by heating a solution of the cobalt-containing compound and any additional metal-containing compounds until the desired volume is obtained through evaporation of solvent (e.g. water).

Preferably, the coating liquid is provided at a temperature of at least 50°C. This reduces the likelihood of crystallisation of the cobalt-containing compound and any additional metal-containing compounds during addition which could lead to poor mixing and an inhomogeneous coating. Furthermore, the use of an elevated temperature allows for the use of metal salts at high concentration and for the coating liquid to be prepared by heating metal salt hydrates.

Typically, the coating liquid is provided at a temperature of from 50 to 80 °C, such as from 50 to 75 °C, 55 to 75 °C, 60 to 75 °C, or 65 to 75 °C.

Typically, the total molar concentration of metal in the coating liquid (i.e. the sum of the molar concentration of each metal in the coating liquid) is at least 0.5 mol/L. The skilled person will understand that the total metal concentration of the coating liquid used will depend on the amount of metal that is required to be applied to the precursor material and also the apparent pore volume of the precursor material. However, total metal concentrations less than 0.5 mol/L may provide an inconsistent modification of the precursor material and / or low levels of grain boundary enrichment. Preferably, the total molar concentration of metal in the coating liquid is at least 0.75 mol/L, 1.0 mol/L, 1.25 mol/L, 1.5 mol/L, 1.75 mol/L, 2.0 mol/L, 2.5 mol/L or 3 mol/L.

The skilled person will understand that the total molar concentration will be limited by the solubility of the metal-containing compounds in the required volume of coating liquid. Typically, the total molar concentration of metal in the coating liquid is less than 7 mol/L. Typically, the total molar concentration of metal in the coating liquid is from 0.5 mol/L to 7 mol/L, such as from 1 mol/L to 7 mol/L, 2 mol/L to 7 mol/L, 3 mol/L to 7 mol/L, or 4 mol/L to 7 mol/L.

The coating liquid is added to the nickel metal precursor particles. Typically, the nickel metal precursor particles are loaded into a mixing vessel prior to the addition of the coating liquid. Typically, the particles are mixed during the coating liquid addition, for example through stirring or agitation. This ensures an even distribution of the coating liquid.

It may be preferable that the addition step may be carried out under a controlled atmosphere, such as an atmosphere free of CO₂ and / or moisture, which may reduce the level of impurities, such as lithium carbonate, on the surface.

The addition may be carried out by a number of means, such as portionwise addition to a mixing vessel via an inlet pipe, or by spraying the coating liquid onto the lithium nickel metal precursor particles. It is considered that spraying the coating liquid may lead to a more consistent distribution of the coating liquid, a more reproduceable coating process, and a shorter mixing time following complete addition of the coating liquid.

The addition step may be carried out at an elevated temperature, i.e. the temperature at which the vessel containing the lithium nickel metal precursor particles is heated to is higher than ambient temperature prior to addition of the coating liquid, such as a temperature greater than 25°C, preferably greater than 30°C, or greater than 40°C. The use of an elevated temperature during the addition step reduces the likelihood of solidification or crystallisation of the components of the coating liquid during the addition step, therefore helping to ensure a homogenous coating.

It may be preferable to carry out the addition step at a temperature of from 40 °C to 80 °C, such as from 50 °C to 70 °C, or from 55°C to 65 °C.

In the process as described herein the coating liquid is added to the nickel metal precursor particles using an incipient wetness process. By an incipient wetness process it is meant herein that the volume of coating liquid added to the nickel metal precursor particles is controlled based on the determination of the apparent pore volume of the nickel metal precursor particles. The use of an incipient wetness process leads an impregnated powder and not to a suspension of precursor particles in a coating liquid as described by prior art processes.

Preferably, the coating liquid is added to the lithium nickel metal precursor particles in a volume corresponding to 50 to 150 % of the apparent pore volume of the nickel metal precursor particles. The use of a volume of coating liquid less than 50 % of the apparent pore volume of the particles may lead to an inhomogeneous surface-modification. It has been found that the use of a volume of coating liquid greater than 150% of the apparent pore volume of the particles is not required in order to achieve surface-modification and grain boundary enrichment, and detrimentally leads to an increased need for solvent removal and / or drying and associated energy consumption.

Preferably, the coating liquid is added to the nickel metal precursor particles in a volume corresponding to 70 to 150 %, or more preferably 90 to 150 %, of the apparent pore volume of the nickel metal precursor particles. The use of a volume of coating liquid greater than 70 %, or greater than 90% of the available pore volume may lead to enhanced grain boundary enrichment.

Preferably, the coating liquid is added to the nickel metal precursor particles in a volume corresponding to 70 to 125%, or more preferably 90 to 125 % of the apparent pore volume of the nickel metal precursor particles. Use of a volume of coating liquid less than 125% of the apparent pore volume leads to a lower requirement for drying and evaporation. It has also been observed that the use of a volume of coating liquid greater than 125% of the apparent pore volume of the particles can lead to pooling of the coating liquid in the vessel containing the nickel metal precursor particles once the coating liquid has been added which may be detrimental to achieving a homogeneous surface-modification. It may be preferred that the volume of coating liquid added corresponds to 95 % to 120 % of the apparent pore volume of the particles, or 95 % to 115 %, or 95 % to 110 %, or 95 % to 105 %.

It may also be preferred that the volume of coating liquid added corresponds to 100 % to 150 % of the apparent pore volume of the particles, or 100 to 125 %, 100 to 120 %, 100 to 115 % or 100 to 110 %.

The apparent pore volume per unit mass of the nickel metal precursor material is determined using a torque measurement system, such as a Brabender Adsorptometer "C". This method involves the measurement of torque during a mixing process. Water is added to the nickel metal precursor particles whilst mixing, leading to a torque peak on a volume added-torque curve. The volume of water added per unit mass of particles at the point of onset of the torque peak is the apparent pore volume per unit mass of particles.

Following complete addition of the coating liquid the particles may be mixed for a period of time. Typically, the particles may be mixed for a period of from 1 to 60 minutes following complete addition of the coating liquid.

The mixture is then optionally dried prior to a calcination step, for example by heating to a temperature of from 100 to 150 °C, such as 120°C, for example for a period of time of from 1 to 5 hours, such as 2 hours. It may be preferred that the mixture is subjected directly to the calcination step, without the requirement for additional drying. Advantageously, the mixture may be transferred directly from the vessel used for the addition of the coating liquid to a calciner.

The mixture is then calcined to form the surface-modified particulate lithium nickel metal oxide material. Advantageously, the process as described herein preferably involves a single calcination step.

The calcination step is typically carried out at a temperature of less than or equal to about 800 °C. The use of higher calcination temperatures may lead to lower grain boundary enrichment and / or a uniform distribution of metal elements within the lithium nickel metal oxide particles.

It may be further preferred that the calcination step is carried out at a temperature less than or equal to about 750 °C, less than or equal to 740 °C, less than or equal to 730 °C, less than or equal to 720 °C, or less than or equal to 710 °C.

Preferably, the calcination step comprises heating the mixture to a temperature of at least about 600 °C, or at least about 650 °C, for example heating the mixture to a temperature of between about 600 °C and about 800 °C, about 600 and about 750 °C, or about 650 and about 750°C. It may be further preferred that the calcination step comprises heating the mixture to a temperature of at least about 600 °C, or at least about 650 °C for a period of at least 30 minutes, at least 1 hour, or at least 2 hours. The period may be less than 8 hours.

Preferably, the calcination comprises the step of heating the mixture to a temperature of 600 to 800 °C for a period of from 30 mins to 8 hours, more preferably a temperature of 600 to 750 °C for a period of from 30 mins to 8 hours, even more preferably a temperature of 650 to 750 °C for a period of from 30 mins to 8 hours.

The calcination step may be carried out under a CO₂-free atmosphere. For example, CO₂-free air may be flowed over the materials during heating and optionally during cooling. The CO₂-free air may, for example, be a mix of oxygen and nitrogen. Preferably, the atmosphere is an oxidising atmosphere. As used herein, the term "CO₂-free" is intended to include atmospheres including less than 100 ppm CO₂, e.g. less than 50 ppm CO₂, less than 20 ppm CO₂ or less than 10 ppm CO₂. These CO₂ levels may be achieved by using a CO₂ scrubber to remove CO₂.

It may be preferred that the CO₂-free atmosphere comprises a mixture of O₂ and N₂. It may be further preferred that the mixture comprises N₂ and O₂ in a ratio of from 1:99 to 90:10, for example from 1:99 to 50:50, 1:99 to 10:90, for example about 7:93. High oxygen levels in the calcination (such as greater than 90% oxygen) may provide benefits in enhancing the discharge capacity of the formed surface-modified lithium nickel metal oxide material. The CO₂-free atmosphere may also be an oxygen atmosphere.

It will be understood by the skilled person that the process requires the addition of at least one lithium-containing compound prior to the calcination step in order to form the desired lithium nickel metal oxide. The process therefore additionally comprises the addition of at least one lithium-containing compound to the nickel metal precursor particles and / or mixing the impregnated powder with at least one lithium-containing compound prior to calcination step. As used herein, the term lithium-containing compound means a compound comprising lithium ions and a suitable inorganic or organic counter-ion.

Preferably, the addition of at least one lithium-containing compound to the nickel metal precursor particles is achieved by the inclusion of a lithium-containing compound in the coating liquid. The inclusion of a lithium-containing compound in the coating liquid may be beneficial in order to avoid voids or defects in the structure of the surface-modified particulate lithium nickel metal oxide material which may lead to a reduced lifetime. Suitable lithium-containing compounds that may be included in the coating liquid include lithium salts, such as inorganic lithium salts, for example lithium nitrate or lithium sulfate. Lithium nitrate may be particularly preferred.

Alternatively or in addition, the addition of at least one lithium-containing compound to the precursor particles may be achieved by mixing at least one lithium-containing compound with the precursor particles prior to addition of the coating liquid. Suitable lithium-containing compounds that may be mixed with the precursor particles include lithium salts, such as inorganic lithium salts. Lithium hydroxide may be particularly preferred.

Alternatively or in addition, the process comprises mixing the impregnated powder with at least one lithium-containing compound prior to the calcination step. Suitable lithium-containing compounds that may be mixed with the impregnated powder comprise one or more lithium compounds selected from lithium carbonate, lithium oxide, lithium hydroxide, lithium chloride, lithium nitrate, lithium sulfate, lithium hydrogen carbonate, lithium acetate, lithium fluoride, lithium bromide, lithium iodide and lithium peroxide. It may be preferred that the lithium-containing compound mixed with the impregnated powder is selected from one or more of lithium carbonate and lithium hydroxide. It may be further preferred that the lithium-containing compound mixed with the impregnated powder is lithium hydroxide. The present invention may provide particular advantages where the lithium-containing compound mixed with the impregnated powder is lithium hydroxide. Lithium hydroxide is a particularly suitable lithium-containing compound where the lithium transition metal oxide material contains low levels of manganese (for example less than 10 mol%, less than 5 mol%, or less than 1 mol%, with respect to moles of transition metal in the lithium nickel metal oxide material), and/or does not contain any manganese.

If a lithium-containing compound has been added to the impregnated powder the mixture is typically mixed for a period of time prior to calcination, for example for a period of from 1 to 60 minutes following complete addition of the lithium-containing compound.

Preferably, the coating liquid comprises a first lithium-containing compound, such as lithium nitrate or lithium sulphate, and the impregnated powder is mixed with a second lithium-containing compound, such as lithium hydroxide, prior to calcination step (iv).

The process may include one or more milling steps, which may be carried out after the calcination step. The nature of the milling equipment is not particularly limited. For example, it may be a ball mill, a planetary ball mill or a rolling bed mill. The milling may be carried out until the particles reach the desired size. For example, the particles of the surface-modified lithium nickel metal oxide material may be milled until they have a volume particle size distribution such that the D50 particle size is at least 5 µm, e.g. at least 5.5 µm, at least 6 µm or at least 6.5 µm. The particles of surface-modified lithium nickel metal oxide material may be milled until they have a volume particle size distribution such that the D50 particle size is 15 µm or less, e.g. 14 µm or less or 13 µm or less.

The process of the present invention may further comprise the step of forming an electrode (typically a cathode) comprising the surface-modified lithium nickel metal oxide material. Typically, this is carried out by forming a slurry of the surface-modified lithium nickel metal oxide material, applying the slurry to the surface of a current collector (e.g. an aluminium current collector), and optionally processing (e.g. calendaring) to increase the density of the electrode. The slurry may comprise one or more of a solvent, a binder, carbon material and further additives.

Typically, the electrode of the present invention will have an electrode density of at least 2.5 g/cm³, at least 2.8 g/cm³ or at least 3 g/cm³. It may have an electrode density of 4.5 g/cm³ or less, or 4 g/cm³ or less. The electrode density is the electrode density (mass/volume) of the electrode, not including the current collector the electrode is formed on. It therefore includes contributions from the active material, any additives, any additional carbon material, and any remaining binder.

The process of the present invention may further comprise constructing a battery or electrochemical cell including the electrode comprising the surface-modified lithium nickel metal oxide material. The battery or cell typically further comprises an anode and an electrolyte. The battery or cell may typically be a secondary (rechargeable) lithium (e.g. lithium ion) battery.

The present invention will now be described with reference to the following examples, which are provided to assist with understanding the present invention, and are not intended to limit its scope.

### Examples

Example 1 - Method of producing a surface-modified lithium nickel metal oxide material (Li_{1.01}Ni_{0.867}Co_{0.115}Al_{0.006}Mg_{0.012}O₂).

### (A) Calculation of the apparent pore volume of nickel metal precursor material

90.0 g of a nickel metal hydroxide precursor material of formula Ni_{0.91}Co_{0.08}Mg_{0.01}(OH)₂ (Brunp) was loaded into a Brabendar absorptometer B torque measurement system and demineralised water added at 4 ml/min. The torque readings were plotted against the amount of liquid added per mass of solid material. The torque readings showed a peak value at 0.19 ml / g. The onset of the torque increase leading to this peak was then taken as the apparent pore volume per unit mass of the nickel metal hydroxide precursor material (0.15 ml / g).

### (B) Calculation of volume of coating liquid to be used

Based on a desired surface-modified lithium nickel metal oxide composition of Li_{1.01}Ni_{0.867}Co_{0.115}Al_{0.006}Mg_{0.012}O₂, the amounts of Co, Al and Li that were required to be added to a 250g sample of the nickel metal hydroxide precursor were calculated (as set out below), and hence the amounts of the nitrate crystals to be used.

| | |
|---|---|
| Mass of precursor: 250g | |
| Mass of cobalt to be added: 6.30 g | Weight of Co(NO₈)₂.6H₂O: 31.09 g |
| Mass of aluminium to be added: 0.46 g | Weight of Al(NO₈)₂.9H₂O: 6.41 g |
| Mass of lithium to be added: 0.50 g | Weight LiNO₃: 4.95 g |
| Mass of lithium hydroxide to be added after coating: | 65.82 g |

(2) The volume of liquid obtained when the mixed nitrate crystals were heated to 60 °C was measured as 23 mL.
(3) The apparent pore volume of the nickel metal hydroxide precursor (250g) was calculated as 37.5 mL (0.15 mL/g * 250 g).
(4) The amount of water to be added to the nitrate crystals to achieve a volume of coating liquid corresponding to approximately 110% of the apparent pore volume was calculated as 18 mL.

### (C) Preparation of surface-modified lithium nickel metal oxide material (Li_{1.01}Ni_{0.867}Co_{0.115}Al_{0.006}Mg_{0.012}O₂)

Cobalt (II) nitrate hexahydrate (31.1 g, ACS, 98 - 102%, from Alfa Aesar), aluminium nitrate nonahydrate (6.41 g, 98% from Alfa Aesar) and lithium nitrate (4.95 g, anhydrous, 99%, from Alfa Aesar) were combined with water (18 ml) and then heated to approximately 60°C to form the coating liquid. A sample of the nickel metal hydroxide precursor material of formula Ni_{0.91}Co_{0.08}Mg_{0.01}(OH)₂ (250g) was loaded into a Winkworth Mixer model MZ05 and heated to 60°C with the mixer running at 50 rpm. The coating liquid was then added to the precursor material using a pipette over a period of 5 minutes. The mixer was then left to run for 10 minutes before addition of anhydrous LiOH (65.8 g). The mixer was left to run for a further 10 minutes before being discharged.

Approximately 48 g of the powder was added to an alumina crucible (dimensions: 4.5 cm x 4.5 cm, bed loading 2.4 g/cm²). The sample was then calcined in a Carbolite Gero GPC1200 furnace with CO₂-free air supplied from a scrubber. The sample was calcined by heating at 5 °C/min to 450 °C, 2 hour hold at 450 °C, heating at 2 °C/min to 700 °C, 6 hour hold at 700 °C, cool to RT with 2.5 ml/min flow rate of CO₂-free air.

### Example 2 - Variation in calcination conditions

Samples of surface-modified lithium nickel metal oxide material of target formula Li_{1.01}Ni_{0.867}Co_{0.115}Al_{0.006}Mg_{0.012}O₂ were produced by a method as described for Example 1. The calcination conditions were modified as follows:
Example 2A: The calcination was carried out with the same temperature profile as Example 1 but with a bed depth of 0.8 g/cm². X-ray powder diffraction (XRD) of the material produced showed crystalline material with diffraction patterns attributed to a main phase of LiNiO₂.
Example 2B: The powder was calcined with the same calcination conditions as Example 1 with a 2.5 ml/min flow rate of oxygen: nitrogen (93:7) and a bed depth of 2.4 g/cm².
Example 2C: The powder was calcined using the following temperature profile and with an atmosphere of oxygen: nitrogen (93:7): 5 °C/min to 450 °C, 1 hour hold at 450 °C, heating at 2 °C/min to 700 °C, 2 hour hold at 700 °C, cooled to room temperature.

### Example 3 - Electrochemical testing

The samples from Examples 1 and 2 were electrochemically tested using the protocol set out below. The samples were compared to control samples of lithium nickel metal oxide materials matching the compositions prepared using a solution immersion - spray drying method analogous to the method described in WO2013025328.

### Electrochemical Protocol

The electrodes were prepared by blending 94%wt of the lithium nickel metal oxide active material, 3%wt of Super-C as conductive additive and 3%wt of polyvinylidene fluoride (PVDF) as binder in N-methyl-2-pyrrolidine (NMP) as solvent. The slurry was added onto a reservoir and a 125 µm doctor blade coating (Erichsen) was applied to aluminium foil. The electrode was dried at 120 °C for 1 hour before being pressed to achieve a density of 3.0 g/cm³. Typically, loadings of active is 9 mg/cm². The pressed electrode was cut into 14 mm disks and further dried at 120 °C under vacuum for 12 hours.

Electrochemical test was performed with a CR2025 coin-cell type, which was assembled in an argon filled glove box (MBraun). Lithium foil was used as an anode. A porous polypropylene membrane (Celgrad 2400) was used as a separator. 1M LiPF₆ in 1:1:1 mixture of ethylene carbonate (EC), dimethyl carbonate (DMC) and ethyl methyl carbonate (EMC) with 1% of vinyl carbonate (VC) was used as electrolyte.

The cells were tested on a MACCOR 4000 series using C-rate and retention tests using a voltage range of between 3.0 and 4.3 V. The C-rate test charged and discharged cells at 0.1 C and 5 C (0.1C = 200 mAh/g). The capacity retention test was carried out at 1C with samples charged and discharged over 50 cycles.

### Electrochemical testing results

The results of electrochemical testing are shown in Table 1. This data shows that the process as described herein produces a material which at least matches that capacity retention obtained using prior art immersion - spray-drying methods.

**Table 1 - Electrochemical results of the testing of the materials produced in Examples 1 and 2**

| Sample | 0.1 C discharge capacity mAh/g | Capacity retention (50 cycles, %) |
|---|---|---|
| Control (spray dried) | 213 | 95 |
| Example 1 | 202 | 96 |
| Example 2A | 197 | 96 |
| Example 2B | 205 | 95 |
| Example 2C | 210 | 93 |

### Example 4 - Analysis of grain boundary enrichment

The material produced in Example 2A was analysed by FIB-TEM (Focussed Ion Beam-Transmission Electron Microscopy). Samples were mounted on conductive carbon tab within a glove box, and transferred to the FIB using the transfer shuttle. The samples were prepared using a focused ion beam instrument with a gallium ion beam at 30 kV. Final polishing was performed at 5 kV. The samples were examined in the JEM 2800 (Scanning) Transmission Electron Microscope using the following instrumental conditions: Voltage (kV) 200; C2 aperture (um) 70 and 40; Dark-field (Z-contrast) imaging in scanning mode using an off-axis annular detector. Compositional analysis was carried out by X-ray emission detection (EDX) in the scanning mode.

This analysis indicated that there was cobalt enrichment at the particle surface and at the grain boundaries with a higher cobalt concentration at the grain boundaries and at the surface than is present in the primary particles.

TEM analysis of a sample prepared according to the method of Example 2A indicated that there was aluminium enrichment at the particle surface with a higher aluminium concentration at the surface than is present in the primary particles.

## Claims

1. A process for producing a surface-modified particulate lithium nickel metal oxide material having a composition according to Formula 1:
LiₐNiₓCo_{y}A_{z}O_{2+b} Formula 1
in which:
A is one or more of Al, V, Ti, B, Zr, Cu, Sn, Cr, Fe, Ga, Si, Zn, Mg, Sr, Mn, Ca, S, Ce, La, Mo, Nb, P, Sb, W;
0.8 ≤ a ≤ 1.2
0.5 ≤ x < 1
0 < y ≤ 0.5
0 ≤ z ≤ 0.2
-0.2 ≤ b ≤ 0.2
x + y + z = 1
the process comprising the steps of:
(i) providing nickel metal precursor particles in the form of secondary particles comprising a plurality of primary particles;
(ii) providing a coating liquid comprising a cobalt-containing compound;
(iii) adding the coating liquid to the nickel metal precursor particles using an incipient wetness process to form an impregnated powder;
(iv) calcining the impregnated powder to form the surface-modified particulate lithium nickel metal oxide material;
the process additionally comprising the addition of at least one lithium-containing compound to the nickel metal precursor particles and / or
mixing the impregnated powder with at least one lithium-containing compound prior to calcination step (iv).

2. A process according to claim 1 wherein A is one or more of Al, V, Ti, B, Zr, Cu, Sn, Cr, Fe, Ga, Si, Zn, Mg, Sr, Mn, and Ca.

3. A process according to claim 1 or claim 2 wherein the incipient wetness process comprises the addition of the coating liquid to the nickel metal precursor particles, the volume of the coating liquid corresponding to 50 to 150 % of the apparent pore volume of the to the nickel metal precursor particles.

4. A process according to any one of claims 1 to 3 wherein the nickel metal precursor is a nickel metal hydroxide or oxyhydroxide precursor.

5. A process according to any one of the preceding claims wherein A includes Al and / or Mg, or is Al and / or Mg.

6. A process according to any one of the preceding claims 1 to 5 wherein A includes Al and the coating liquid comprises an aluminium-containing compound, preferably aluminium nitrate.

7. A process according to any one of the preceding claims wherein the coating liquid comprises a lithium-containing compound, such as lithium nitrate.

8. A process according to any one of the preceding claims wherein the impregnated powder is mixed with lithium hydroxide prior to calcination step (iv).

9. A process according to any one of the preceding claims wherein the nickel metal precursor particles are mixed with a lithium-containing compound, such as lithium hydroxide, prior to the addition of the coating liquid.

10. A process according to any one of the preceding claims wherein the coating liquid is provided at a temperature from 50 to 80 °C.

11. A process according to any one of the preceding claims wherein the total molar concentration of metal in the coating liquid is at least 0.5 mol/L, at least 0.75 mol/L, at least 1 mol/L, at least 1.25 mol/L, at least 1.5 mol/L, at least 1.75 mol/L or at least 2 mol/L.

12. A process according to any one of the preceding claims wherein the coating liquid is added to the nickel metal precursor particles by spraying the coating liquid onto the particles.

13. A process according to any one of the preceding claims wherein the calcination step comprises heating to a temperature from 600 to 800 °C, preferably for a period of 30 mins to 8 hours.

14. A process according to any one of the preceding claims wherein the volume of coating liquid added corresponds to 70 to 150 % of the apparent pore volume of the nickel metal precursor particles, preferably 90 to 150 % or 90 to 125 % of the apparent pore volume of the nickel metal precursor particles.

15. A process according to any one of the preceding claims further comprising the step of forming an electrode comprising the surface-modified lithium nickel metal oxide material.
